# EUROPEAN PATENT APPLICATION

(11) **EP 3 431 433 A2**
(43) Date of publication of application: **23.01.2019**
(21) Application number: 18180535.9
(22) Date of filing: 28.06.2018
(51) Int. Cl.: B66B 17/12, B66B 1/34

(54) **ELEVATOR CAR POWER SUPPLY SYSTEM**

(30) Priority: 28.06.2017 US 201715635910
(71) Applicant: Otis Elevator Company, Farmington, Connecticut 06032 (US)
(72) Inventor: OKAWA, Masafumi, Sanbu-Gun,, Chiba 289-1693 (JP); ONODA, Ryuji, Sanbu-Gun,, Chiba 289-1693 (JP)
(74) Representative: Dehns

(57) **Abstract**

An elevator car power supply system comprises an elevator car (2), a counterweight (4) including one or a plurality of storage batteries (14) charged by a non-contact power transmission system and a compensation rope (24) with one end connected to the elevator car (2) and the other end connected to the counterweight (4), the compensation rope (24) including a power line (26) for transmitting power from the storage batteries (14) of the counterweight (4) to the elevator car (2). The elevator car power supply system may further comprise a wireless communication system for communicating elevator signals between an elevator controller (29) and a car controller (10).

## Description

### BACKGROUND

This invention generally relates to elevator systems. More particularly, this invention relates to an elevator car power supply system which eliminates traveling cables from elevator systems.

Elevator systems typically employ a traveling cable connected between an elevator car and a machine room at the top of the hoistway. The traveling cable provides power to operate various devices in the elevator car such a car controller, a car operating panel (COP), a door operator, an air conditioner, a car fan, car lighting, an outlet and a display device. The traveling cable also communicates signals such as the status signals of buttons and switches on the COP and control signals for operating the door operator as well as visual data and audio data for the display.

In high rise buildings, in particular, the traveling cable causes a weight imbalance in the elevator system which imposes limitations on elevator system design. As the elevator becomes higher and the traveling cable becomes longer, power lines in the traveling cable become thicker and heavier in consideration of voltage drop. Thus, a heavier counterweight will be necessary to balance the system. Further, a longer traveling cable increases the risk of interference with other components positioned in the hoistway, especially during building sway conditions.

One known approach to eliminate a traveling cable from elevator systems is to provide storage batteries on the elevator car. However, this approach adds weight to the elevator car and a heavier counterweight will be necessary to balance the elevator car. Such increase in the overall weight of the elevator system will lead to a larger machine and an increased number of main ropes.

In view of the above and other considerations, there is a need for eliminating the traveling cable from elevator systems without increasing the overall weight of an elevator system.

### BREIF SUMMARY

According to one embodiment of the invention, an elevator car power supply system comprises an elevator car, a counterweight including one or a plurality of storage batteries charged by a non-contact power transmission system and a compensation rope with one end connected to the elevator car and the other end connected to the counterweight, the compensation rope including a power line for transmitting power from the storage batteries of the counterweight to the elevator car.

According to another embodiment of the invention, A method for transmitting power to an elevator car comprises providing a counterweight including one or a plurality of storage batteries and a non-contact power receiver, providing one or a plurality of non-contact power transmitters along a hoistway, charging the storage batteries via non-contact power transmission and transmitting power from the storage batteries to an elevator car through a power line included in a compensation rope with one end connected to the elevator car and the other end connected to the counterweight.

### BRIEF DESCRIPTION OF THE DRAWINGS

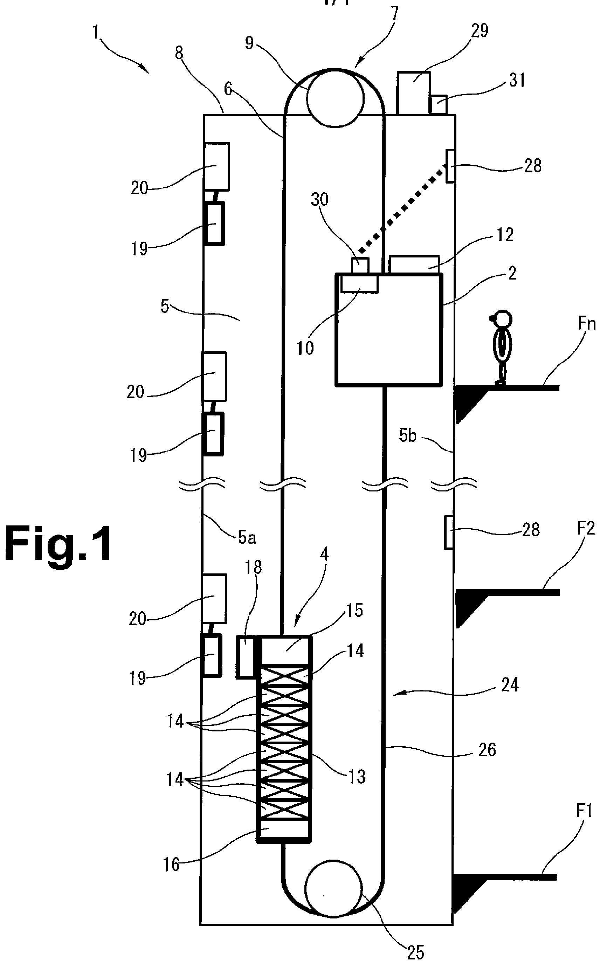

Fig. 1 is a schematic view of an elevator system including the elevator car power supply system of the present invention.

The detailed description explains embodiments of the invention, together with advantages and features, by way of example with reference to the drawing.

### DETAILED DESCRIPTION

Fig. 1 schematically shows selected portions of an example elevator system 1 including the elevator car power supply system of the present invention. The configuration of the elevator system components may vary from this example in various aspects. In other words, the invention is not necessarily limited to the example elevator system configuration or the specific components of the illustration.

An elevator car 2 and counterweight 4 are both vertically movable within a hoistway 5 to carry passengers to different floors F1 - Fn of a building. A plurality of main ropes 6 couple the elevator car 2 to the counterweight 4. The main ropes 6 may comprise round steel ropes or flat belts. A variety of roping configurations may be useful in an elevator system that includes features designed according to an embodiment of this invention.

In the example shown in figure 1, the main ropes 6 are used for supporting the weight of the elevator car 2 and the counterweight 4 and propelling them in a desired direction within the hoistway 5. An elevator machine 7 located in a machine room 8 includes a traction sheave 9 that rotates and causes movement of the main ropes 6 to cause the desired movement of the elevator car 2, for example.

The elevator car 2 includes various devices which need to be powered. Such devices may include a car controller 10, a car operating panel (COP), a door operator, an air conditioner, a car fan, car lighting, an outlet and a display device for providing information to passengers in the car. The elevator car 2 comprises a power supply 12 for supplying power to these components. The power supply 12 may include an AC/DC converter and a transformer as necessary.

The counterweight 4 comprises a frame 13 with one or a plurality of storage batteries 14 mounted thereon in place of weights of conventional counterweights. The storage batteries 14 may be conventional batteries such as lithium-ion batteries. The counterweight further comprises a charger 15 for charging the storage batteries 14 via a non-contact power transmission system and a DC/AC inverter 16. Of course weights may be added to the counterweight 4 if necessary.

The non-contact power transmission system includes a receiver 18 mounted on the counterweight 4, a plurality of transmitters 19 installed at intervals along the counterweight side hoistway wall 5a and high frequency converters 20 connected to a power source (not shown) and which provide a high frequency AC to a corresponding transmitter 19. The transmitters 19 are positioned so that they will oppose the receiver 18 on the counterweight 4 when the elevator car 2 stops at a floor F. The transmitters 19 transmit power to the receiver 18 in a non-contact manner when it opposes the receiver 18. Therefore, the storage batteries 14 will be charged each time the elevator car 2 stops at a floor F.

It is also possible to return the elevator car 2 to a predetermined floor during night time and fully charge the storage batteries 14 at that floor to cover the amount of power needed for full day operation. This will allow for the reduction of the number of necessary transmitters 19 and high frequency converters 20.

Non-contact power transmission may be achieved by inductive coupling where power is transferred from a transmitter coil to a receiver coil via a magnetic field. However, other technologies such as resonant inductive coupling, capacitive coupling or magnetodynamic coupling may equally be used and the present invention is not limited to a particular non-contact power transmission technology.

A compensation rope 24 is provided to compensate for the weight of the main rope 6 and reduce the load of the elevator machine 7. The compensation rope may comprise one or a plurality of round steel ropes or flat belts including a plurality of longitudinally extending wire cords and a coating covering the wire cords. One end of the compensation rope 24 is connected to the bottom of the elevator car 2 and the other end of the compensation rope 24 is connected to the bottom of the counterweight 4. To maintain the tension of the compensation rope, a compensation sheave 25 is suspended at the bottom of the hoistway 5 and pulls the compensation rope 26 downward under the effect of gravity, for example.

At least one of the steel ropes or flat belts of the compensation rope 24 of the present invention serves as a power line 26 which connects the DC/AC inverter 16 to the power supply 12 of the elevator car 2. The DC/AC inverter 16 provides an AC of 230 volts, for example, to the power supply 12. In the case round steel ropes are used, the steel ropes that serve as the power line 26 are insulated by a coating. Alternatively, the compensation sheave 25 of the present invention may comprise an insulation material or coating. It is also possible to include a separate power cable in the compensation rope 24.

A wireless communication system is provided for communication of elevator signals between an elevator controller 29 which may be positioned in the machine room 8 and the car controller 10 such as by CAN communication. The wireless communication system comprises one or a plurality of master wireless stations 28 positioned on the elevator car side hoistway wall 5b and a slave wireless station 30 mounted on the counterweight 4. The master wireless station 28 may also be positioned in the machine room 8. The number of necessary master wireless stations 28 depends on the length of the hoistway 5 and the performance of the wireless station 28.

All signals input in the elevator car such as car calls input via the COP are processed in the car controller 10 and transmitted from the car controller 10 to the elevator controller 29. The elevator controller 29 processes such signals together with other signals such as hall calls, and controls the elevator system 1 based on such signals. The elevator controller 29 transmits control signals such as door control signals and COP display signals to the car controller 10. Visual data/audio data from a customer device 31 such as a data server may also be transmitted via the wireless stations 28, 30 to a display in the elevator car 2.

According to the present invention, by providing storage batteries 14 on the counterweight 4 and transmitting power from the counterweight 4 to the elevator car 2 via a power line 26 included in a compensation rope 26, it is possible to eliminate heavy power lines from the traveling cable and mitigate weight imbalance. Further, by communicating elevator signals via a wireless communication system, the traveling cable may be completely eliminated from the elevator system 1 which obviates the risk of interference with other components positioned in the hoistway 5.

Since the storage batteries 14 replace conventional weights and the power line 26 at least partially replaces a conventional compensation rope, it is possible to eliminate the traveling cable from the elevator system without increasing the overall weight of the elevator system 1.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An elevator car power supply system, comprising:
an elevator car;
a counterweight including one or a plurality of storage batteries charged by a non-contact power transmission system; and
a compensation rope with one end connected to the elevator car and the other end connected to the counterweight, the compensation rope including a power line for transmitting power from the storage batteries of the counterweight to the elevator car.

2. The elevator car power supply system of claim 1, further comprising a wireless communication system for communicating elevator signals between an elevator controller and a car controller.

3. The elevator car power supply system of claim 2, wherein the wireless communication system comprises at least one master wireless station positioned along a hoistway or in a machine room and a slave wireless station on the elevator car.

4. The elevator car power supply system of claim 3, wherein the master wireless station also transmits visual data and/or audio data from a customer device to the elevator car.

5. The elevator car power supply system of any preceding claim, wherein the non-contact power transmission system comprises a non-contact power receiver installed on the counterweight and one or a plurality of non-contact power transmitters installed along a hoistway;
and optionally wherein the one or a plurality of non-contact power transmitters are positioned to oppose the non-contact power receiver on the counterweight when the elevator car stops at a floor.

6. The elevator car power supply system of any preceding claim, wherein the non-contact power transmission system is an inductive coupling system.

7. The elevator car power supply system of any preceding claim, wherein the power from the storage batteries of the counterweight are used to power at least one of a car controller, a car operating panel (COP), a door operator, an air conditioner, a car fan, car lighting, an outlet and a display device in the elevator car.

8. The elevator car power supply system of any preceding claim, wherein the compensation rope comprises one or a plurality of round steel ropes or flat belts including a plurality of wire cords and a coating covering the wire cords, at least one of the steel ropes or flat belts serving as the power line;
and/or:
wherein the round steel ropes serving as the power line are insulated.

9. The elevator car power supply system of any preceding claim, wherein the counterweight further includes a charger and a DC/AC inverter;
and optionally wherein the elevator car includes a power supply and the DC/AC inverter transmits power from the storage batteries to the power supply.

10. A method for transmitting power to an elevator car, comprising:
providing a counterweight including one or a plurality of storage batteries and a non-contact power receiver;
providing one or a plurality of non-contact power transmitters along a hoistway;
charging the storage batteries via non-contact power transmission; and
transmitting power from the storage batteries to an elevator car through a power line included in a compensation rope with one end connected to the elevator car and the other end connected to the counterweight.

11. The method of claim 10, further comprising communicating elevator signals between an elevator controller and a car controller via a wireless communication system;
and optionally:
transmitting visual data and/or audio data via the wireless communication system from a customer device to the elevator car.

12. The method of claims 10 or 11, wherein the charging of the storage batteries takes place when the elevator car stops at a floor and the one or a plurality of non-contact power transmitters oppose the non-contact power receiver on the counterweight;
and/or:
wherein the storage batteries are charged by inductive coupling.

13. The method of any of claims 10 to 12, wherein transmitting power from the storage batteries to an elevator car includes transmitting power through one or a plurality of round steel ropes or flat belts of the compensation rope, the flat belts including a plurality of wire cords and a coating covering the wire cords and the round steel ropes which transmit power being insulated.

14. The method of any of claims 10 to 13, wherein transmitting power from the storage batteries to an elevator car includes transmitting power to at least one of a car controller, a car operating panel (COP), a door operator, an air conditioner, a car fan, car lighting, an outlet and a display device in the elevator car.

15. The method of any of claims 10 to 14, wherein power from the storage batteries is transmitted from a DC/AC inverter of the counterweight to a power supply of the elevator car.
